# EUROPÄISCHE PATENTSCHRIFT

(11) **EP 0 505 398 B1**
(45) Veröffentlichungstag und Bekanntmachung des Hinweises auf die Patenterteilung: **17.08.1994**
(21) Anmeldenummer: 91900215.4
(22) Anmeldetag: 10.12.1990
(51) Int. Cl.: B01D 53/04

(54) **VERFAHREN ZUR GEWINNUNG VON STICKSTOFF AUS LUFT DURCH DRUCKWECHSELADSORPTION AN KOHLENSTOFF-MOLEKULARSIEBEN**
PROCESS FOR OBTAINING NITROGEN FROM AIR BY PRESSURE SWING ADSORPTION ON CARBON MOLECULAR SIEVES
PROCEDE D'OBTENTION D'AZOTE A PARTIR DE L'AIR PAR ADSORPTION A CYCLE DE PRESSION SUR TAMIS MOLECULAIRE DE CARBONE

(30) Priorität: 15.12.1989 DE 3941487
(43) Veröffentlichungstag der Anmeldung: 30.09.1992
(73) Patentinhaber: Bergwerksverband GmbH, D-45307 Essen (DE)
(72) Erfinder: SCHRÖTER, Hans, Jürgen, D-4330 Mülheim (DE); SCHULTE-SCHULZE BERNDT, Alfons, D-4300 Essen 1 (DE); HEIMBACH, Heinrich, D-4100 Duisburg 25 (DE); TARNOW, Ferdinand, D-4100 Duisburg 25 (DE)
(86) Internationale Anmeldenummer: EP9002140
(87) Internationale Veröffentlichungsnummer: WO9108823

(56) Entgegenhaltungen:
- EP-A- 0 121 042
- EP-A- 0 302 658
- EP-A- 0 332 390
- DE-A- 3 433 058
- DE-A- 3 702 190

## Beschreibung

Die Erfindung betrifft ein Druckwechselverfahren zur Gewinnung von Stickstoff aus Luft unter dem Einsatz der Kohlenstoff-Molekularsiebe gemäß dem Oberbegriff von Anspruch 1. Ein solches Verfahren ist z. B. aus der DE-C- 29 32 333 bekannt.

Kohlenstoff-Molekularsiebe haben die Eigenschaft, daß sie den Sauerstoff der Luft bevorzugt vor Stickstoff adsorbieren, so daß während eines Adsorptionsprozesses der Stickstoff mit hohen Reinheiten gewonnen werden kann. Die Trennung erfolgt durch einen Molekularsiebeffekt, wobei während des Adsorptionsschrittes das kleinere Sauerstoffmolekül in die Feinstporen des Kohlenstoff-Molekularsiebes eindringt, während das größere Stickstoffmolekül kaum oder so gut wie gar nicht in die Poren eindringen kann. Sobald ein mit Kohlenstoff-Molekularsieb gefülltes Adsorberbett mit Sauerstoff weitgehend gesättigt ist, wird das Kohlenstoff-Molekularsieb durch Anwendung einer Druckentspannung, z. B. auf 1 bar Umgebungsdruck, oder durch Anwendung eines Vakuums in den Unterdruckbreich regeneriert: die Sauerstoffmoleküle werden wieder aus den Poren des Kohlenstoff-Molekularsiebes entfernt, woraufhin wieder ein neuer Adsorptionsschritt beginnen kann.

Bei der technischen Durchführung des Druckwechselverfahrens zur Stickstoffgewinnung aus Luft oder Stickstoff enthaltenden Gasen verwendet man im allgemeinen zwei oder auch mehr wechselweise betriebene Adsorber, in denen abwechselnd die Schritte der Adsorption und Desorption durchgeführt werden.

Zur wirtschaftlichen Gestaltung des Verfahrens kann gemäß EP-A- 0 121 042 zwischen dem Adsorptions- und Desorptionsschritt ein Druckausgleich durchgeführt werden, wobei die unteren Enden und die oberen Enden der Adsorber durch Rohrleitungen kurzgeschlossen werden, um den Wirkungsgrad des Verfahrens zu erhöhen. Vor dem erneuten Adsorptionsschritt kann ein Teil des erzeugten Produktstickstoffs im Gegenstrom in den Adsorber zurückgeführt werden, um ein Produktgas mit höheren Reinheiten zu erzeugen, vgl. z. B. DE-A- 34 33 058.

Die Verfahren zur Stickstoffgewinnung aus Luft oder stickstoffhaltigen Gasen mit Kohlenstoff-Molekularsieben werden gemäß EP-A 0 085 155 im allgemeinen mit trockener oder zumindest vorgetrockneter Luft durchgeführt, weil unter dem Einfluß der Luftfeuchtigkeit die spezifische Stickstoffausbeute (m³ N₂/m³ CMS h) im Laufe der Einfahrzeit der Druckwechselanlage stark abnimmt. Die Kurzbezeichnung CMS in der Klammer bedeutet Kahlenstoff-Molekularsieb. Selbst bei vorgetrockneter Luft, z. B. auf einen Drucktaupunkt (8,5 bar) von +2° C, sinkt die spezifische Stickstoffausbeute nach eigenen Untersuchungen der Anmelderin in den ersten Wochen des Druckwechselbetriebes um etwa 5 - 10 % ab. Noch ungünstigere Ergebnisse werden erhalten, wenn man eine mit Kohlenstoff-Molekularsieb gefüllte Druckwechselanlage mit 100 % gesättigter Luft betreibt.

Um den negativen Feuchtigkeitseinfluß in Grenzen zu halten, werden Kältetrockner oder Adsorptionstrockner eingesetzt, womit die Eintrittsluft für die Druckwechselanlage auf technisch vertretbare Werte, z. B. auf einen Drucktaupunkt (8,5 bar) von +2° C getrocknet wird. Solche Kälte- oder Adsorptionstrockner sind den Druckwechselanlagen vorgeschaltet (vgl. NATO-ASI-Series E: Applied Sciences, Vol 158 (1989), P. 269/283).

Eine weitere Möglichkeit besteht darin, den unteren Teil der Druckwechseladsorber mit einem speziellen Trocknungsmittel, z. B. Aluminiumoxyd oder Silicagel zu füllen, um damit die Feuchtigkeit von dem Kohlenstoff-Molekularsieb weitgehend fern zu halten, vgl. z. B. US-A- 4 203 958. Dabei muß man allerdings den Nachteil in Kauf nehmen, daß der mit Trocknungsmitteln gefüllte untere Teil der Druckwechseladsorber nicht für die Trennung der Luft in Stickstoff und Sauerstoff zur Verfügung steht. Dies bewirkt aber eine Verunreinigung des Produktgases, eine Reduzierung der spezifischen Stickstoffausbeute sowie eine Erhöhung des spezifischen Energiebedarfs, da auch das von dem Trocknungsmittel eingenommene Totvolumen zyklisch auf Adsorptionsdruck gebracht werden muß.

Aufgabe der vorliegenden Erfindung ist es, die Nachteile gemäß dem vorgenannten Stand der Technik zu vermeiden. Diese Aufgabe wird durch die kennzeichnenden Merkmale des Anspruchs 1 gelöst.

Weiterbildungen sind in den Unteransprüchen 2 bis 7 aufgeführt.

Bei Anwendung des erfindungsgemäßen Verfahrens wird mit einer Zwei-Bettbefüllung nach einer Einfahrzeit der Druckwechselanlage (bis zu mehreren Wochen) eine spezifische Stickstoffausbeute erzielt, die um 5 bis 10 % höher ist als bei der herkömmlichen Verfahrensweise mit Ein-Bettbefüllung.

Gegenüber der Verfahrensweise mit einer besonderen Trockenmittelschicht im Adsorber, die der Kohlenstoff-Molekularsiebschicht B vorgeschaltet wird, ergibt sich zudem der Vorteil, daß mit dem zur Aufnahme der Restfeuchte eingesetzten Kohlenstoff-Molekularsieb A nicht nur ein Trocknungseffekt erzielt wird, sondern gleichzeitig auch ein Gastrennmittel vorliegt, welches sich durch die Restfeuchteaufnahme derart verändert, daß dieses einen nahezu gleichniedrigen spezifischen Luftbedarf hat wie die Kohlenstoff-Molekularsiebfüllung B, die von vornherein einen niedrigen spezifischen Luftbedarf hat. Hieraus folgt ein insgesamt kleinerer spez. Energiebedarf gegenüber der Verfahrensweise mit einer Trockenmittelschicht, weil diese hinsichtlich der Gastrennung ein nicht nutzbares Totvolumen darstellt.

Die Bestimmung des Relativvolumens (RV) zur Charakterisierung von Kohlenstoff-Molekularsieben wird in der folgenden Weise durchgeführt: ein mit Kohlenstoff-Molekularsieb gefüllter Glasadsorber mit einem Volumen von 200 cm³, der mit einem Gaszufuhr- und einem Gasabfuhrventil versehen ist, wird 2 Minuten lang von Luft durchströmt (Druck 1 bar, Temperatur 20° C). Danach wird die Gaszufuhr unterbrochen, d. h., das Gasabfuhrventil geschlossen, und das Gas mit Hilfe einer Vakuumpumpe aus dem Glasadsorber abgepumpt und in ein Gasometer gedrückt, bis ein Vakuum von 2 - 3 mbar im Glasadsorber erreicht ist. Das gemessene Gasvolumen ist ein mehrfaches, z. B. zwei- bis dreifaches des geometrischen Volumeninhaltes (Schüttvolumen) der Kohlenstoff-Molekularsiebprobe und wird als Relativvolumen (RV) bezeichnet. Wird die Konzentration an Sauerstoff in dem abgepumpten Gasvolumen gemessen, so ergibt sich, daß die Sauerstoffkonzentration gegenüber der normalen Konzentration in Luft (das sind 21 mol.-%) erhöht ist. Offensichtlich dringt der Sauerstoff bevorzugt in die Poren ein, während der Stickstoff zu einem großen Teil außen an den Molekularsiebkörnern vorbeiströmt.

Abhängig von der Porenstruktur eines Kohlenstoff-Molekularsiebes dringt mehr oder weniger Sauerstoff in dessen Poren ein. Die Testmethode ist daher geeignet, die Trennfähigkeit von Kohlenstoff-Molekularsieben zu charakterisieren.

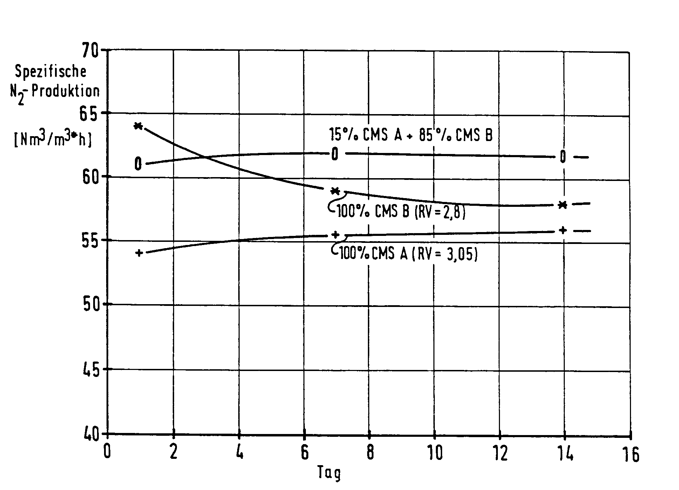

In der Figur ist die spezifische N₂-Produktion in Abhängigkeit von der Zeit von zwei Ein-Bettbefüllungen - 100 % CMS B (RV = 2,8) sowie 100 % CMS A (RV = 3,05) - und von einer Zwei-Bettbefüllung - 15 % CMS A + 85 % CMS B - dargestellt. Die Zwei-Bettbefüllung, die erfindungsgemäß aus den Kohlenstoff-Molekularsieben der beiden Ein-Bettbefüllungen zusammengesetzt ist, wobei das Kohlenstoff-Molekularsieb A mit dem größeren Relativvolumen (zur gleichzeitigen Aufnahme der Restfeuchte und Gastrennung) im unteren Adsorberteil eingesetzt wurde, weist günstigere Werte hinsichtlich der spezifischen N₂-Produktion aus als die beiden Ein-Bettbefüllungen allein. Sowohl die Testanlagen als auch die Prozeßbedingungen waren bei den verschiedenen Testläufen gleich.

## Patentansprüche

1. Verfahren zur Gewinnung von Stickstoff aus Luft durch Druckwechselad- und -desorption an zwei wechselweise betriebenen, mit Kohlenstoff-Molekularsieben gefüllten Adsorbern, wobei der eine Adsorber mit Luft durchströmt wird, so daß der Sauerstoff adsorbiert und der Stickstoff in angereicherter Form gewonnen wird, und gleichzeitig der andere Adsorber durch Druckentspannung regeneriert wird, **dadurch gekennzeichnet,** daß in einer ersten, luftanströmseitigen Kohlenstoff-Molekularsieb-Schicht der beiden Adsorber, die 1/20 bis 1/2 der gesamten Kohlenstoff-Molekularsiebschicht beträgt, ein Kohlenstoff-Molekularsieb A eingesetzt wird, das gleichzeitig zur Aufnahme der Restfeuchte und zur Gastrennung dient, und daß in einer zweiten, luftabströmseitigen Kohlenstoff-Molekularsiebschicht ein Kohlenstoff-Molekularsieb B eingesetzt wird, das ausschließlich zur Gastrennung dient, und daß das Kohlenstoff-Molekularsieb A ein Relativvolumen von 3,0 bis 3,4 und das Kohlenstoff-Molekularsieb B ein Relativvolumen von 2,3 bis 2,95 haben.

2. Verfahren nach Anspruch 1, **dadurch gekennzeichnet,** daß der Wasserdampfgehalt in der Einsatzluft auf einen Sättigungsgrad (P:PS) zwischen 0,1 und 1,0 eingestellt wird.

3. Verfahren nach Anspruch 1 und 2, **dadurch gekennzeichnet**, daß zwischen dem Adsorptionsschritt und dem Regenerationsschritt ein Druckausgleich durchgeführt wird, indem jeweils die Eingänge und die Ausgänge der beiden Adsorber miteinander verbunden werden.

4. Verfahren nach Anspruch 1 bis 3, **dadurch gekennzeichnet**, daß vor der Adsorptionsphase eine Rückflutung mit einem Teil des zuvor erzeugten Stickstoffs durchgeführt wird.

5. Verfahren nach Anspruch 1 bis 4, **dadurch gekennzeichnet**, daß die Adsorptionsdrucke auf Werte zwischen 3 und 12 bar und die Desorptionsdrucke auf Werte leicht über oder unter 1 bar eingestellt werden.

6. Verfahren nach Anspruch 1 bis 4, **dadurch gekennzeichnet**, daß die Adsorptionsdrucke auf Werte zwischen 1 und 3 bar und die Desorptionsdrucke auf Werte im Bereich des Vakuums eingestellt werden.

## Claims

1. A process for obtaining nitrogen from air by pressure-alteration adsorption and desorption on two alternately driven adsorbers filled with carbon molecular sieves, air being fed through one adsorber in such a manner that the oxygen is adsorbed and the nitrogen is obtained in an enriched form, and at the same time the other adsorber is regenerated by pressure release, **characterised in that** a carbon molecular sieve A is inserted in a first carbon molecular sieve layer of the two adsorbers, on the air influx side, the said layer comprising 1/20 to 1/2 of the total carbon molecular sieve layer, and the said sieve A simultaneously takes up the residual moisture and carries out gas separation, and a carbon molecular sieve B is inserted, solely for gas separation, in a second carbon molecular sieve layer on the air outflow side, and the carbon molecular sieve A has a relative volume of from 3.0 to 3.4, and the carbon molecular sieve B has a relative volume of from 2.3 to 2.95.

2. A process in accordance with claim 1, **characterized in that** the water-vapour content of the air used is adjusted to a degree of saturation (P:PS) between 0.1 and 1.0.

3. A process in accordance with claims 1 and 2, **characterized in that** pressure compensation is carried out between the adsorption phase and the regeneration phase, in that the respective inputs and outputs of the two adsorbers are connected to one another.

4. A process in accordance with claims 1 to 3, **characterized in that** prior to the adsorption phase, return flow is carried out using a portion of the nitrogen previously produced.

5. A process in accordance with claims 1 to 4, **characterized in that** the adsorption pressures are adjusted to values between 3 and 12 bar, and the desorption pressures are adjusted to values slightly over or under 1 bar.

6. A process in accordance with claims 1 to 4, **characterised in that** the adsorption pressures are adjusted to values between 1 and 3 bar, and the desorption pressures are adjusted to values in the region of a vacuum.

## Revendications

1. Procédé d'obtention d'azote à partir de l'air par adsorption et désorption à alternances de pressions dans deux adsorbeurs à tamis moléculaires de carbone, fonctionnant en service alternatif, où l'un des adsorbeurs est parcouru par de l'air, en sorte que l'oxygène soit adsorbé et que l'azote soit obtenu sous forme enrichie, cependant que l'autre adsorbeur est simultanément régénéré par détente de pression, caractérisé en ce que dans une première couche de tamis moléculaire de carbone, côté admission du courant d'air, des deux adsorbeurs, qui atteint 1/20 à 1/2 de la couche de tamis moléculaire de carbone totale, on met en oeuvre un tamis moléculaire de carbone A, qui sert simultanément à la capture de l'humidité résiduelle et à la séparation de gaz et en ce que, dans une seconde couche de tamis moléculaire de carbone, côté échappement du courant d'air, on met en oeuvre un tamis moléculaire de carbone B, qui sert exclusivement à la séparation de gaz et en ce que le tamis moléculaire de carbone A possède un volume relatif de 3,0 à 3,4 et le tamis moléculaire de carbone B possède un volume relatif de 2,3 à 2,95.

2. Procédé suivant la revendication 1, caractérisé en ce que la teneur en vapeur d'eau de l'air initial est réglée à un degré de saturation (P:PS) compris entre 0,1 et 1,0.

3. Procédé suivant l'une quelconque des revendications 1 et 2, caractérisé en ce que, entre l'étape d'adsorption et l'étape de régénération, on entreprend une égalisation de pressions, pour autant que l'on raccorde à chaque fois entre elles les entrées et les sorties des deux adsorbeurs.

4. Procédé suivant l'une quelconque des revendications 1 à 3, caractérisé en ce qu'avant la phase d'adsorption, on entreprend un reflux avec une partie de l'azote obtenu auparavant.

5. Procédé suivant l'une quelconque des revendications 1 à 4, caractérisé en ce que les pressions d'adsorption sont réglées à des valeurs comprises entre 3 et 12 bars et les pressions de désorption sont réglées à des valeurs légèrement supérieures ou inférieures à un bar.

6. Procédé suivant l'une quelconque des revendications 1 à 4, caractérisé en ce que les pressions d'adsorption sont réglées à des valeurs comprises entre 1 et 3 bars et les pressions de désorption sont réglées à des valeurs qui se situent dans le domaine du vide.
